# FASCICULE DE BREVET EUROPEEN

(11) **EP 0 929 746 B1**
(45) Date de publication et mention de la délivrance du brevet: **11.06.2003**
(21) Numéro de dépôt: 97912149.8
(22) Date de dépôt: 01.10.1997
(51) Int. Cl.: F15C 5/00, F04B 43/04, F04B 53/10

(54) **DISPOSITIF FLUIDIQUE MICRO-USINE ET PROCEDE DE FABRICATION**
MICROBEARBEITETE FLUIDISCHE VORRICHTUNG UND HERSTELLUNGSVERFAHREN
MICRO-MACHINED DEVICE FOR FLUIDS AND METHOD OF MANUFACTURE

(30) Priorité: 03.10.1996 FR 9612054
(43) Date de publication de la demande: 21.07.1999
(73) Titulaire: WESTONBRIDGE INTERNATIONAL LIMITED, Dublin 2 (IE)
(72) Inventeur: MAILLEFER, Didier, CH-1092 Belmont sur Lausanne (CH); RENAUD, Philippe, CH-1028 Preverenges (CH)
(74) Mandataire: Dronne, Guy
(86) Numéro de dépôt international: EP9705550
(87) Numéro de publication internationale: WO98014707

(56) Documents cités:
- EP-A- 0 412 270
- EP-A- 0 546 427
- EP-A- 0 601 516
- WO-A-95/19502
- DE-A- 2 354 249
- US-A- 5 050 838
- KOHL: "development of microactuators based on the shape memory effect" SUPPL MENT AU JOUNAL DE PHYSIQUE III, vol. 5, no. 12, décembre 1995, ICOMAT 95 LAUSANNE, SWITZERLAND, 20-25 AO T 1995, pages 1187-1192, XP000646870
- RAPP R ET AL: "LIGA MICROPUMP FOR GASES AND LIQUIDS" SENSORS AND ACTUATORS A, vol. A40, no. 1, 1 janvier 1994, pages 57-61, XP000434539

## Description

L'invention concerne un dispositif fluidique micro-usiné et son procédé de fabrication, ledit dispositif comprenant un substrat possédant un conduit d'écoulement et une couche mince formant membrane déformable.

Un tel dispositif constitue, par exemple, un organe de contrôle d'entrée/sortie d'un liquide qui peut être utilisé comme clapet anti-retour, ou dans une micropompe.

On rencontre des clapets de ce type, par exemple, mais non exclusivement, dans des micropompes à usage médicale qui délivrent régulièrement une quantité contrôlée de médicament. La fabrication de ces micropompes est basée sur les technologies de micro-usinage du silicium et l'utilisation d'un actionneur piézo électrique. La demande de brevet internationale PCT IB 9500028 présente une micropompe auto-amorçante. Pour cette application, et dans d'autres cas encore, il est nécessaire de réaliser un clapet d'entrée et, parfois un clapet de sortie, pour lequel le taux de fuite est minimum, voire nul. Ce taux de fuite du clapet correspond au débit de liquide qui traverse le clapet lorsque la membrane est dans sa position de repos, c'est-à-dire lorsque le clapet est fermé. De plus, puisque le clapet fonctionne grâce à l'élasticité de la membrane, cette élasticité permettant la déformation de la membrane lorsqu'une pression de fluide suffisante est injectée à l'entrée du clapet, il est important de ne pas détériorer l'état surfacique et massique de cette membrane lors de la fabrication du clapet afin d'obtenir une membrane présentant le minimum de contraintes internes.

L'objet de la présente invention est de fournir un dispositif-usiné d'entrée/sortie de liquide présentant un taux de fuite minimum dans la position fermée du clapet et dont le procédé de fabrication conduise à une membrane présentant de bonnes propriétés physiques et mécaniques et peu de contraintes internes.

Lorsque se pose le problème de recouvrir un substrat par une couche mince métallique, plusieurs procédés peuvent être alors utilisés. La couche mince métallique peut être déposée sur le substrat par évaporation ou bien par la technique de pulvérisation cathodique. Néanmoins, ces procédés présentent certaines limitations. La plupart du temps, les couches métalliques déposées présentent des propriétés physiques amoindries par rapport aux mêmes matériaux sous forme massique. Ainsi, la couche est habituellement obtenue avec des contraintes internes importantes, notamment du fait de la structure cristalline de la couche déposée, qui est très sensible aux conditions de dépôt. De plus, une couche mince déposée présente une épaisseur limitée à approximativement 1 micromètre, au-delà de cette valeur le procédé devenant trop coûteux du fait que le temps nécessaire pour réaliser le dépôt est trop important.

Une autre possibilité consiste à réaliser un dépôt électrolytique de la couche métallique, cette technique ne présentant pas tous les inconvénients précédemment cités. Néanmoins, il n'est pas possible de déposer tous les matériaux, notamment les métaux, par cette méthode et les propriétés physiques et mécaniques de la couche déposée sont souvent insuffisantes.

Le document EP 0 601 516 porte sur un dispositif à membrane de pompage servant au refroidissement d'un ensemble à semi-conducteur, la membrane étant formée d'un film flexible réalisé en un matériau conducteur de l'électricité.

Le document EP 0 412 270 concerne un dispositif fluidique micro-usiné comprenant un clapet formé d'un dispositif à membrane, cette dernière étant une feuille mince métallique.

Le document EP 0 546 427 propose un procédé de fabrication d'une micro-valve avec une membrane mince obtenue par dépôt et formant le siège de la valve.

Conformément au dispositif fluidique selon l'invention, ces buts sont atteints grâce au fait que la couche mince formant par exemple une membrane déformable est une feuille métallique laminée reliée au substrat, au niveau de la zone de recouvrement, par la technique de soudage anodique. Selon l'invention, le procédé de fabrication d'un dispositif fluidique micro-usiné se caractérise en ce qu'il comprend les étapes suivantes:
- on fournit un substrat possédant un conduit d'écoulement,
- on dépose par des moyens physico-chimiques une couche sacrificielle sur le substrat,
- on conserve par photolithographie et attaque chimique les zones de la couche sacrificielle qui donneront lieu à une membrane non attachée au substrat,
- on réalise par laminage une couche mince déformable constituée d'une feuille métallique,
- on place la couche mince sur le substrat,
- on relie par soudage anodique ladite couche mince aux zones du substrat non recouvertes par la couche sacrificielle,
- on usine ladite couche mince par photolithographie et attaque chimique après sa fixation sur le substrat ; et
- on attaque à nouveau la couche sacrificielle libérant ainsi la membrane du substrat.

Ainsi, selon l'invention, on utilise une feuille métallique laminée pouvant être reliée à un substrat puis à nouveau usinée pour la réalisation de micro-structures. Les avantages tirés de cette invention sont, notamment, des propriétés physiques et mécaniques excellentes et bien contrôlées du métal après son laminage. Ainsi, les contraintes présentes dans le matériau sont réduites, l'état de contrainte final de la membrane résultant principalement de la méthode réalisant la liaison entre la membrane et le substrat.

Un autre avantage de la présente invention est la possibilité de fixer la feuille sur une cavité du substrat, permettant ainsi la création directe d'une membrane ou d'un pont sans aucune étape de gravure.

Un autre aspect important de la présente invention est l'utilisation du soudage anodique pour la fixation de la feuille sur le substrat. L'art antérieur n'ayant jamais divulgué l'utilisation de cette technique pour des feuilles métalliques.

La technique de soudage anodique, connue en soi, consiste à porter ensemble des pièces à assembler, à savoir le substrat et la membrane, à une température de l'ordre de 300° C et à placer cet empilement entre deux électrodes en contact avec le substrat et la membrane en appliquant un potentiel négatif de l'ordre de - 1000V à l'électrode appliquée contre le substrat. On obtient ainsi une soudure étanche à relativement basse température entre la membrane et le substrat.

Grâce à l'utilisation d'une feuille de métal laminée, on peut fixer de façon très précise et sur une gamme de valeur assez large, l'épaisseur de la feuille de métal qui servira ultérieurement de membrane dans le clapet ou la micropompe.

Dans le présent texte, par feuille laminée, il faut entendre une feuille obtenue par un procédé métallurgique dans lequel la feuille est obtenue par des passages successifs entre des rouleaux.

L'invention sera mieux comprise et des caractéristiques secondaires et leurs avantages apparaîtront au cours de la description de réalisations donnée ci-dessous à titre d'exemple.

Il est entendu que la description et les dessins ne sont donnés qu'à titre indicatif et non limitatif. Il sera fait référence aux dessins annexés, dans lesquels:
- la figure 1 est une vue en coupe schématique d'un premier mode de réalisation d'un clapet ou d'une valve micro-usiné selon l'invention;
- la figure 2 est une vue du clapet de la figure 1 selon la direction II-II de la figure 1, c'est-à-dire depuis le dessus de ce clapet;
- la figure 3 représente une vue en coupe schématique d'un second mode de réalisation du clapet selon la présente invention, telle qu'il peut être intégré dans une micropompe; et
- la figure 4 illustre la réalisation d'une micropompe conforme à l'invention.

Selon le premier mode de réalisation de l'invention, le clapet micro-usiné 10 constitue un clapet anti-retour. Cette valve 10 comprend un substrat 12, par exemple en verre du type "Pyrex", traversée de part en part par un conduit d'écoulement 14. La sortie du conduit d'écoulement 14 débouche à la surface supérieure 16 du substrat 12. La membrane 18, par exemple une feuille de titane laminée d'épaisseur comprise entre 2 et 10 micromètres, recouvre l'orifice de sortie du conduit 14 et est fixée à la surface supérieure 16 du substrat par une zone périphérique 20. La membrane 18 forme un disque de faible épaisseur comportant au moins un orifice d'écoulement 22 disposé dans une zone de la membrane entourant l'orifice de sortie du conduit d'écoulement 14, de façon que, dans la position de repos de la membrane 18, le conduit 14 et les orifices 22 ne puissent pas communiquer entre eux.

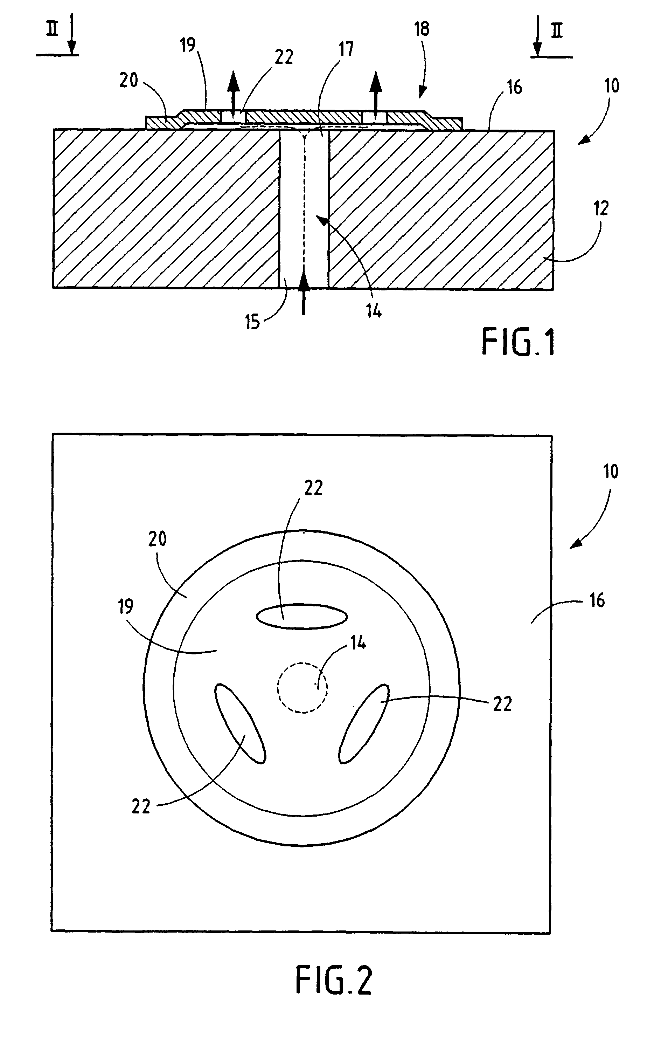

Comme on peut le voir sur la figure 2, les orifices d'écoulement 22 de la membrane 18 peuvent être, par exemple, de forme ovale et être répartis à égale distance les uns des autres dans la zone centrale 19 de la membrane, sur un cercle concentrique à l'orifice de sortie du conduit 14. La zone centrale 19 de la membrane 18 comprenant les orifices 22, n'est donc pas fixée sur le substrat.

Lorsqu'une pression de fluide suffisante arrive par l'orifice d'entrée du conduit d'écoulement 14, cette pression de liquide arrive au niveau de la zone centrale 19 de la membrane qui se déforme par élasticité en se courbant, la périphérie 20 de cette membrane 18 restant fixée au substrat 12. La déformation de la membrane 18 crée un espace entre la membrane et le substrat, le liquide pouvant pénétrer via cet espace dans les orifices d'écoulement 22 de la membrane 18 (flèches sur la figure 1): c'est la position ouverte de la valve 10.

Le fonctionnement d'un tel clapet nécessite donc la fixation permanente de la zone périphérique 20 de la membrane 18 sur le substrat 12, la possibilité pour la membrane 18 de s'écarter du substrat 12 dans la zone centrale 19 de la membrane 18 et une position relative entre le conduit d'écoulement 14 du substrat et les orifices 22 de la membrane de sorte qu'ils ne communiquent pas entre eux dans la position de repos ou position fermée de la valve, grâce à une position relative décalée, et qu'ils puissent communiquer entre eux dans la position ouverte de la valve afin que le liquide s'écoule depuis le conduit 14 à travers les orifices 22.

Le procédé de fabrication d'un tel clapet à membrane va maintenant être décrit. Le conduit d'écoulement 14 est percé dans le substrat 12, par exemple une galette de "Pyrex", par exemple par perçage à ultra-sons avec un diamètre de l'ordre de 0,1mm. Une couche mince sacrificielle en aluminium est déposée à la surface supérieure 16 du substrat 12, entourant l'orifice de sortie du conduit 14, cette couche sacrificielle étant réalisée par évaporation et présentant une épaisseur de l'ordre de 0,1 micromètre. Les contours de la couche d'aluminium sont rectifiés par photolithographie et par gravure grâce à une solution standard de corrosion de l'aluminium. La feuille laminée de titane 18 est fixée au substrat de verre par soudage anodique entre la zone périphérique 20 de la feuille de titane et la surface supérieure 16 du substrat en verre 12, la zone centrale 19 de la feuille de titane se trouvant au-dessus de la couche sacrificielle d'aluminium. Les contours de la feuille de titane sont rectifiés par photolithographie et par gravure grâce à une solution d'acide fluorhydrique diluée. Lors de la dernière étape du procédé de fabrication de cette valve, la couche sacrificielle d'aluminium est complètement enlevée ou dissoute grâce à une solution standard de gravure de l'aluminium.

Ainsi, on obtient une valve dans laquelle l'élément actif, c'est-à-dire la membrane, est pratiquement libre de toutes contraintes internes, ce qui lui permet de présenter de meilleures performances mécaniques, telles que résistance à la déformation ou fatigue, et une meilleure résistance à la corrosion chimique.

Après la dissolution de la couche sacrificielle, la zone centrale 19 de la membrane 18 n'est donc fixée d'aucune manière avec le substrat 12.

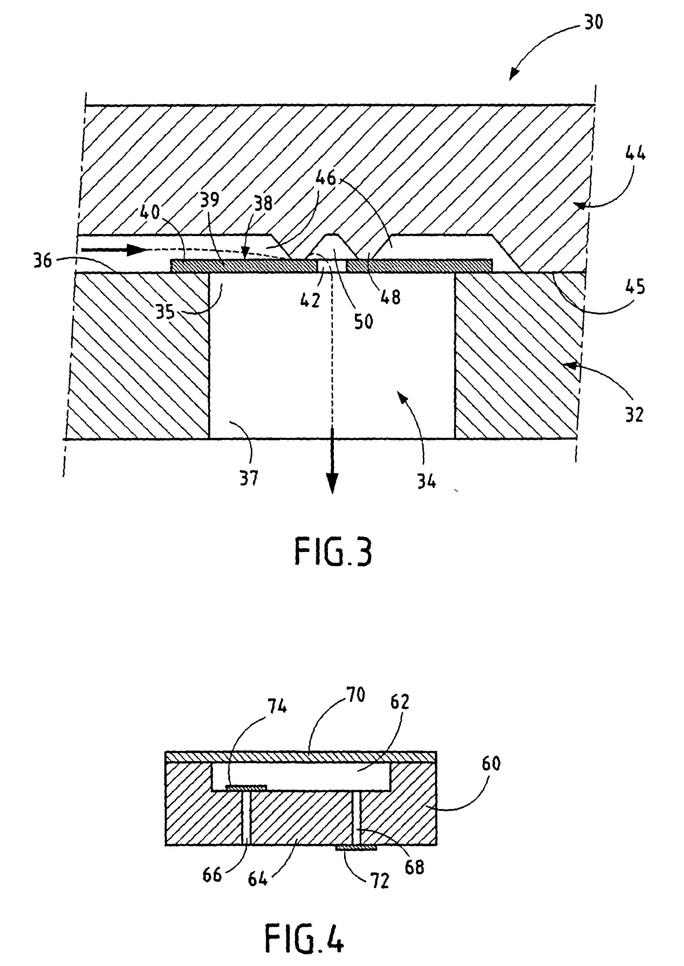

Un second mode de réalisation va maintenant être décrit en relation avec la figure 3, sur laquelle est représenté un clapet 30 tel que celui que l'on peut rencontrer dans une micropompe, par exemple une micropompe telle que celle qui est décrite dans la demande de brevet internationale précitée.

Dans cet exemple de réalisation, le clapet 30 comprend un substrat 32, par exemple en verre, une membrane souple 38 et une plaquette 44, par exemple en silicium. Comme on peut le voir sur la figure 3, le substrat 32 est traversé par un conduit d'écoulement 34 dont l'orifice d'entrée 35, placé dans la partie supérieure du conduit 34 sur la figure 3, est obstrué par la membrane 38. Cette membrane 38, par exemple une feuille de métal laminée, de préférence, en titane, est fixée à la surface plane 36 du substrat de verre 32 adjacente à l'orifice d'entrée 35 du conduit d'écoulement 34 du substrat. La membrane 38 comprend une zone centrale 39 en regard du conduit d'écoulement 34 et une zone périphérique annulaire 40 fixée à la surface 36 du verre 32.

Un orifice 42 traverse la membrane 38, de préférence au centre de la zone centrale 39 de la membrane 38, de façon que cet orifice 42 se trouve dans le prolongement du conduit d'écoulement 34 du substrat 32 et, de préférence, dans le prolongement de l'axe du conduit 34.

La plaquette de silicium 44 est également fixée sur la surface plane 36 du substrat de verre 32, du côté de l'orifice d'entrée 35 du conduit d'écoulement 34. La face de la plaquette en silicium 44 qui se trouve en regard de la membrane 38, n'est pas entièrement plane mais présente une surface de contact 45 reliée à la surface 36 du substrat 32, à l'écart de la membrane 38.

La zone de la plaquette 44 qui se trouve en regard de la membrane 38 est conformée de façon à former une chambre 46 dans laquelle un liquide peut circuler. Il est prévu que cette chambre 46, située entre le substrat 32 et la plaquette de silicium 44, se prolonge au-delà de la zone de la micropompe représentée à la figure 3 et constituant la valve 30, selon la présente invention, en direction de moyens d'arrivée d'un liquide.

La zone de la plaquette 44 située en regard de l'orifice 42 de la membrane 38 présente une saillie ou projection annulaire 48 dont la section transversale, visible sur la figure 3 apparaît comme un double trapèze. L'espace intérieur formé dans cette saillie 48 est également de forme tronconique et constitue l'espace 50 qui se trouve dans le prolongement et en regard de l'orifice 42 de la membrane 38, d'une part, et du conduit d'écoulement 34 du substrat en verre 32, d'autre part.

Il est prévu que, dans la position de repos du clapet 30, l'extrémité libre de la saillie annulaire 48 soit au contact de la zone centrale 39 de la membrane 38, en entourant l'orifice 42. Ainsi, dans la position de repos du clapet 30, la saillie annulaire 48 est un obstacle à l'écoulement d'un liquide entre la chambre 46 adjacente à la plaquette de silicium 44 et le conduit d'écoulement 34 du substrat de verre. Lors du fonctionnement du clapet 30, la pression du liquide contenu dans la chambre 46 augmente, en déformant la zone centrale 39 de la membrane élastique 38, vers le bas dans la disposition représentée à la figure 3, ce qui crée un écartement de la membrane 38 par rapport à l'extrémité libre de la projection 48, et ainsi le passage possible du liquide depuis la chambre 46 en direction de l'espace 50 puis l'écoulement de ce liquide depuis la chambre 50, via l'orifice 42 de la membrane souple déformée 38, dans le conduit d'écoulement 34.

Lorsque tout le liquide provenant des moyens d'arrivée de liquide situé en amont de la chambre 46 s'est écoulé via l'espace 50 et l'orifice 42 dans le conduit d'écoulement 34 en direction d'un autre compartiment de la micropompe, la pression de liquide dans la chambre 46 diminue, et, du fait de son élasticité, la membrane 38 revient dans position initiale, c'est-à-dire en contact avec les extrémités libres de la saillie annulaire 48 de sorte que la chambre 46 et le conduit d'écoulement 34 ne sont plus en communication de liquide l'un avec l'autre.

Ce clapet 30 réalise la fonction d'un clapet anti-retour puisque, grâce à la configuration décrite précédemment, si un liquide contenu dans le conduit d'écoulement 34 du substrat 32 voyait sa pression augmenter, une déformation de la membrane 38 ne permettrait pas le passage de ce liquide via l'orifice 42 et l'espace 50 en direction de la chambre 46, du fait que des extrémités libres de la saillie 48 restent en contact avec la membrane 38 en empêchant sa déformation.

Dans ce second mode de réalisation, la projection annulaire 48 de la plaquette de silicium sert de siège de clapet à la membrane 38 qui s'appuie sur cette projection 48. De préférence, la périphérie 40 de la membrane 38 est fixée sur la surface 36 du substrat 32 par soudage anodique, de même pour la liaison entre la surface 45 de la plaquette de silicium 44 et la surface 36 du substrat en verre.

Ce clapet 30 forme un clapet fonctionnant dans le sens inverse de du clapet 10 précédemment décrite. Dans le cas du clapet 30, la fabrication diffère de celle de la valve 10 en ce qu'il n'est pas nécessaire de recourir à une couche sacrificielle avant la fixation de la membrane sur le substrat.

On remarquera que, sur la figure 3, le conduit d'écoulement 34 possède une dimension transversale plus importante que l'orifice 42 de la membrane 38, de sorte que le conduit d'écoulement 34 constitue une cavité.

La figure 4 illustre l'application de l'invention à la réalisation d'une micropompe. Celle-ci comprend une paroi 60, réalisée par exemple en silicium, qui définit une cavité interne 62. Le fond 64 du corps de la micropompe est percé de deux orifices 66 et 68 respectivement pour l'entrée et la sortie d'un fluide à l'intérieur de la cavité 62. La cavité 62 est obturée à sa partie supérieure par une membrane déformable 70 réalisée de préférence en titane selon le procédé décrit précédemment. La fixation de la périphérie de cette membrane est réalisée comme on l'a indiqué précédemment. Le corps 60 de la micropompe joue le rôle de substrat. Les orifices 66 et 68 sont équipés respectivement intérieurement et extérieurement d'une membrane déformable 74 et 72 jouant le rôle de clapet au sens défini dans la description précédente.

D'autres modes de réalisation alternatifs peuvent rentrer dans le cadre de l'invention. Ainsi, le substrat peut être réalisé non seulement en verre de préférence en boro silicate, de type "Pyrex" ou autres, mais également en silicium ou en céramique ou encore dans d'autres matériaux adaptés aux coefficients de dilatation thermique du métal utilisé. D'autres techniques de fixation peuvent également être utilisées pour fixer la feuille sur le substrat, telles un collage, un soudage, une combinaison au silicium (Ti, Pt Si,...) ou la réalisation d'un eutectique (par exemple Au Si).

Du fait que la feuille de métal laminée conserve des propriétés physiques et mécaniques proches de celles d'un matériau en masse, il est possible d'utiliser cette feuille laminée dans un capteur ou un actionneur électromagnétique avec une membrane possédant des propriétés magnétiques alors bien meilleures que si elle avait été réalisée par dépôt; des feuilles métalliques réalisées dans un alliage à mémoire de forme peuvent également constituer une autre alternative de réalisation.

D'autres matériaux peuvent convenir pour la feuille métallique: platine, iridium, aluminium ou chrome, tantale, niobium, molybdène ou encore des aciers alliés inoxydables tels que les ferro-nickels Fe-Ni. Cependant, il apparaît que le titane est le métal qui se prête le mieux à la soudure anodique. En outre, ce métal présente des propriétés chimiques et mécaniques les mieux adaptées à l'utilisation souhaitée. En outre, il résiste bien à la corrosion et il peut facilement être usiné par gravure chimique.

## Revendications

1. Dispositif fluidique (10;30) micro-usiné, comprenant un substrat (12;32) possédant un conduit d'écoulement (14;34), une couche mince déformable (18;38),
**caractérisé en ce que** ladite couche mince (18;38) est une feuille métallique laminée reliée au substrat (12;32), au niveau d'une zone de recouvrement (20;40) du conduit d'écoulement, par soudage anodique.

2. Dispositif (10;30) micro-usiné selon la revendication 1,
**caractérisé en ce que** ladite couche mince (18;38) présente une épaisseur comprise entre 2 et 10 micromètres.

3. Dispositif (10;30) micro-usiné selon l'une quelconque des revendications précédentes,
**caractérisé en ce que** ladite couche mince (18;38) est réalisée en un matériau choisi parmi le groupe comprenant, le platine, l'iridium, l'aluminium, le chrome, le tantale, le niobium et le molybdène et les aciers alliés inoxydables notamment FE-NI.

4. Dispositif (10;30) micro-usiné selon l'une quelconque des revendications 1 à 2,
**caractérisé en ce que** ladite couche mince (18;38) est en titane.

5. Dispositif selon la revendication 4, **caractérisé en ce que** ledit substrat est réalisé en verre.

6. Dispositif (10;30) micro-usiné selon l'une quelconque des revendications 1 à 3,
**caractérisé en ce que** le substrat (12;32) est en silicium.

7. Application du dispositif selon l'une quelconque des revendications 1 à 6,
**caractérisée en ce que** ladite couche mince est une membrane de pompage.

8. Application du dispositif selon l'une quelconque des revendications 1 à 6,
**caractérisée en ce que** ladite couche mince est une membrane constituant un clapet.

9. Procédé de fabrication d'un dispositif (10;30) micro-usiné pour un dispositif contenant un fluide,
**caractérisé en ce qu'**il comprend les étapes suivantes:
- on fournit un substrat (12;32) possédant un conduit d'écoulement (14;34),
- on dépose par des moyens physico-chimiques une couche sacrificielle sur le substrat,
- on conserve par photolithographie et attaque chimique les zones de la couche sacrificielle qui donneront lieu à une membrane non attachée au substrat,
- on réalise par laminage une couche mince déformable (18;38) constituée d'une feuille métallique,
- on place la couche mince (18;38) sur le substrat (12;32),
- on relie par un procédé de soudage anodique ladite couche mince aux zones du substrat non recouvertes par la couche sacrificielle,
- on usine ladite couche mince par photolithographie et attaque chimique après sa fixation sur le substrat ; et
- on attaque à nouveau la couche sacrificielle libérant ainsi la membrane du substrat.

10. Procédé selon la revendication 9,
**caractérisé en ce que** la membrane (18;38) présente une épaisseur comprise entre 2 et 10 micromètres.

11. Procédé selon l'une des revendications 9 et 10,
**caractérisé en ce que** la membrane (18;38) est réalisée en un matériau choisi parmi le groupe comprenant le platine, l'iridium, l'aluminium, le chrome, le tantale, le nobium et le molybdène, et les aciers alliés inoxydables tels que Fe-Ni.

12. Procédé selon la revendication 9,
**caractérisé en ce que** la couche mince (18;38) est en titane.

13. Procédé selon la revendication 12,
**caractérisé en ce que** le substrat est en verre.

14. Procédé selon l'une quelconque des revendications 9 à 12,
**caractérisé en ce que** le substrat (12;32) est en silicium.

## Patentansprüche

1. Mikrobearbeitete Fluid-Vorrichtung (10; 30), die umfasst ein Substrat (12; 32), das eine Abflussleitung (14; 34) aufweist, und eine dünne verformbare Schicht (18; 38),
**dadurch gekennzeichnet, dass** die dünne Schicht (18; 38) eine gewalzte Metallfolie ist, die im Bereich einer Abdeckungszone (20; 40) für die Abflussleitung durch Anodenverschweißung mit dem Substrat (12; 32) verbunden ist.

2. Mikrobearbeitete Vorrichtung (10; 30) nach Anspruch 1,
**dadurch gekennzeichnet, dass** die dünne Schicht (18; 38) eine Dicke zwischen 2 und 10 µm aufweist.

3. Mikrobearbeitete Vorrichtung (10; 30) nach einem der vorhergehenden Ansprüche,
**dadurch gekennzeichnet, dass** die dünne Schicht (18; 38) aus einem Material hergestellt ist, das ausgewählt ist aus der Gruppe, die umfasst Platin, Iridium, Aluminium, Chrom Tantal, Niob und Molybdän und die nicht rostenden Legierungsstähle, insbesondere Fe-Ni.

4. Mikrobearbeitete Vorrichtung (10; 30) nach einem der Ansprüche 1 bis 2,
**dadurch gekennzeichnet, dass** die dünne Schicht (18; 38) aus Titan besteht.

5. Vorrichtung nach Anspruch 4,
**dadurch gekennzeichnet, dass** das Substrat aus Glas hergestellt ist.

6. Mikrobearbeitete Vorrichtung (10; 30) nach einem der Ansprüche 1 bis 3,
**dadurch gekennzeichnet, dass** das Substrat (12; 32) aus Silicium besteht.

7. Verwendung der Vorrichtung nach einem der Ansprüche 1 bis 6,
**dadurch gekennzeichnet, dass** die dünne Schicht eine Pumpmembran ist.

8. Verwendung der Vorrichtung nach einem der Ansprüche 1 bis 6,
**dadurch gekennzeichnet, dass** die dünne Schicht eine Membran ist, die ein Klappenventil darstellt.

9. Vorrichtung zur Herstellung einer mikrobearbeiteten Vorrichtung (10; 30) für eine ein Fluid enthaltende Vorrichtung,
**dadurch gekennzeichnet, dass** es die folgenden Stufen umfasst:
- Bereitstellung eines Substrats (12; 32), das eine Abflussleitung (14; 34) aufweist,
- Abscheidung einer Opferschicht auf dem Substrat auf physikalischchemischem Wege,
- Konservierung der Zonen der Opferschicht, die eine an das Substrat nicht gebundene Membran bilden sollen, durch Fotolithographie und Ätzen,
- Herstellung einer verformbaren dünnen Schicht (18; 38), die aus einer Metallfolie besteht, durch Walzen,
- Aufbringen der dünnen Schicht (18; 38) auf das Substrat (12; 32),
- Verbinden der dünnen Schicht durch Anodenschweißen mit den Zonen des Substrats, die von der Opferschicht nicht bedeckt sind,
- Bearbeitung der dünnen Schicht durch Fotolithographie und Ätzen nach ihrer Fixierung an dem Substrat; und
- erneutes Ätzen der Opferschicht, um dadurch die Membran des Substrats freizulegen.

10. Verfahren nach Anspruch 9,
**dadurch gekennzeichnet, dass** die Membran (18; 38) eine Dicke zwischen 2 und 10 µm hat.

11. Verfahren nach einem der Ansprüche 9 und 10,
**dadurch gekennzeichnet, dass** die Membran (18; 38) aus einem Material hergestellt wird, das ausgewählt wird aus der Gruppe, die umfasst Platin, Iridium, Aluminium, Chrom, Tantal, Niob und Molybdän und die nicht rostenden Stahllegierungen wie Fe-Ni.

12. Verfahren nach Anspruch 9,
**dadurch gekennzeichnet, dass** die dünne Schicht (18; 38) aus Titan besteht.

13. Verfahren nach Anspruch 12,
**dadurch gekennzeichnet, dass** das Substrat aus Glas besteht.

14. Verfahren nach einem der Ansprüche 9 bis 12,
**dadurch gekennzeichnet, dass** das Substrat (12; 32) aus Silicium besteht.

## Claims

1. A micro-machined fluid-flow device (10;30) comprising a substrate (12;32) possessing a flow duct (14;34), and a deformable thin layer (18;38),
**characterised in that** said thin layer (18;38) is a rolled metal sheet connected to the substrate (12;32) in a zone (20;40) overlapping the flow duct by anodic bonding.

2. A micro-machined device (10;30) according to claim 1,
**characterised in that** said thin layer (18;38) is of a thickness lying in the range 2 micrometers (µm) to 10 µm.

3. A micro-machined device (10;30) according to any one of the preceding claims,
**characterised in that** said thin layer (18;38) is made of a material selected from the group comprising: platinum, iridium, aluminium, chromium, tantalum, niobium, and molybdenum, and stainless steel alloys, in particular Fe-Ni.

4. A micro-machined device (10;30) according to claim 1 or 2,
**characterised in that** said thin layer (18;38) is made of titanium.

5. A device according to claim 4, **characterised in that** said substrate is made of glass.

6. A micro-machined device (10;30) according to any one of claims 1 to 3,
**characterised in that** the substrate (12;32) is made of silicon.

7. The use of the device according to any one of claims 1 to 6,
**characterised in that** said thin layer is a pump membrane.

8. The use of the device according to any one of claims 1 to 6,
**characterised in that** said thin layer is a membrane constituting a flap valve.

9. A method of manufacturing a micro-machined device (10;30) for a device containing a fluid,
the method being **characterised in that** it comprises the following steps:
- a substrate (12;32) is provided that possesses a flow duct (14;34);
- a sacrificial layer is deposited on the substrate by physicochemical means;
- zones of the sacrificial layer that are to give rise to a membrane which is not attached to the substrate are conserved by photolithography and chemical etching;
- a deformable thin layer (18;38) constituted by a metal sheet is made by rolling;
- the thin layer (18;38) is placed on the substrate (12;32);
- said thin layer is connected to the zones of the substrate that are not covered by the sacrificial layer by means of an anodic bonding method;
- said thin layer is machined by photolithography and chemical etching after it has been fixed on the substrate; and
- the sacrificial layer is again etched, thereby releasing the membrane from the substrate.

10. A method according to claim 9,
**characterised in that** the membrane (18;38) is of a thickness lying in the range 2 µm to 10 µm.

11. A method according to claim 9 or 10,
**characterised in that** the membrane (18;38) is made of a material selected from the group comprising: platinum, iridium, aluminium, chromium, tantalum, niobium, and molybdenum, and stainless steel alloys, in particular Fe-Ni.

12. A method according to claim 9,
**characterised in that** the thin layer (18;38) is made of titanium.

13. A method according to claim 12,
**characterised in that** the substrate is made of glass.

14. A method according to any one of claims 9 to 12,
**characterised in that** the substrate (12;32) is made of silicon.
